# FASCICULE DE BREVET EUROPEEN

(11) **EP 4 427 463 B1**
(45) Date de publication et mention de la délivrance du brevet: **25.11.2026**
(21) Numéro de dépôt: 22797427.6
(22) Date de dépôt: 03.10.2022
(51) Int. Cl.: H04N 23/70, H04N 23/60, B60R 1/00

(54) **PROCÉDÉ ET SYSTÈME POUR GÉRER LE FONCTIONNEMENT D'UNE CAMÉRA ET D'UNE INTERFACE HOMME-MACHINE D'UN VÉHICULE AUTOMOBILE**
VERFAHREN UND SYSTEM ZUR VERWALTUNG DES BETRIEBS EINER KAMERA UND EINER MENSCH-MASCHINE-SCHNITTSTELLE EINES KRAFTFAHRZEUGS
METHOD AND SYSTEM FOR MANAGING THE OPERATION OF A CAMERA AND A HUMAN-MACHINE INTERFACE OF A MOTOR VEHICLE

(30) Priorité: 03.11.2021 FR 2111651
(43) Date de publication de la demande: 11.09.2024
(73) Titulaire: Stellantis Auto SAS, 78300 Poissy (FR)
(72) Inventeur: ELKABIR, Taoufik, Dar Bouazza, 27223 (MA); HADOUNI, Doha, Dar Bouazza, 27223 (MA); GASSI, Anass, Fès, 30050 (MA); LAHSAINI, Achraf, 33800 BORDEAUX (FR)
(74) Mandataire: ESIP
(86) Numéro de dépôt international: PCT/FR2022/051865
(87) Numéro de publication internationale: WO 2023/079221

(56) Documents cités:
- US-A1- 2005 083 432

## Description

### Domaine technique de l'invention

La présente invention concerne le domaine des systèmes informatiques et électroniques qui sont embarqués à bord des véhicules automobiles pour améliorer l'ergonomie et le confort des véhicules ainsi que la sécurité de la conduite. L'invention porte en particulier sur un procédé de gestion, par un système informatique embarqué à bord d'un véhicule automobile, d'une caméra agencée dans le véhicule pour réaliser des prises de vues des environs du véhicule et d'une interface homme-machine du véhicule. L'invention concerne également un système informatique mettant en œuvre un tel procédé. L'invention s'applique, notamment, aux voitures.

### État de la technique antérieure

On sait que certains véhicules automobiles actuels sont équipés d'appareillages informatiques et électroniques qui fournissent des fonctionnalités d'aide à la conduite, notamment pour aider les conducteurs à réaliser des manœuvres en marche arrière. Pour ce faire, de tels appareillages utilisent généralement au moins une caméra agencée au niveau de la partie arrière du véhicule, communément appelée caméra de recul, qui permet de réaliser des prises de vues de l'environnement qui se trouve derrière le véhicule, prises de vues qui sont retranscrites sur un écran de l'interface homme-machine du véhicule, écran qui est généralement agencé à proximité du poste de conduite, par exemple sur la console centrale. Ainsi, de tels appareillages sont donc indéniablement très utiles la plupart du temps. En revanche, il n'en demeure pas moins qu'il existe des situations dans lesquelles cela n'est pas le cas. En effet, dans des situations où le soleil est rasant ou couchant derrière le véhicule, la lumière du soleil et/ou la lumière qui est réfléchie par les surfaces à proximité du véhicule rendent parfois inutilisables les prises de vues réalisées par la caméra, car, du fait de la présence du soleil et/ou de la lumière qui est réfléchie par les surfaces, l'image dynamique qui est diffusée sur l'écran peut alors présenter une trop grande proportion de sa surface qui est surexposée, i.e. trop claire, et qui ne permet donc plus de discerner de manière sûre l'environnement de conduite derrière le véhicule. Dans de telles situations, le conducteur peut alors ne pas discerner correctement des objets ou des personnes qui se trouvent derrière le véhicule et cela peut engendrer un risque d'accident, d'autant plus lorsque l'on considère que les appareillages d'aide à la conduite connus ne proposent aucune solution pour prendre en charge ces cas de figure.

En outre, l'état de la technique est connu du document US2005083432A1.

### Résumé de l'invention

L'invention vise à pallier cet inconvénient. L'invention a en effet pour but de fournir un procédé et un système qui permettent de minimiser le risque d'accident dans ces situations où une prise de vue réalisée au moyen d'une caméra de recul d'un véhicule automobile et diffusée sur un écran d'une interface homme-machine du véhicule présente une trop grande proportion de sa surface qui est surexposée. Par ce biais, l'invention vise à améliorer la sécurité de la conduite lors la réalisation de manœuvres en marche arrière avec des véhicules qui sont équipés d'une caméra de recul.

Ce but est atteint, selon un premier objet de l'invention, au moyen d'un procédé de gestion, par un système informatique embarqué à bord d'un véhicule automobile, du fonctionnement d'une caméra de recul agencée à bord du véhicule pour réaliser des prises de vues des environs du véhicule et d'une interface homme-machine du véhicule, le procédé comprenant les étapes de :
i) acquérir une première image générée au moyen de la caméra ;
ii) déterminer si la première image présente une trop grande proportion de sa surface qui est surexposée ; et, lorsqu'il est établi que tel est le cas,
iii) provoquer une modification d'au moins un réglage de la caméra ;
iv) acquérir une deuxième image générée au moyen de la caméra ;
v) déterminer si la deuxième image présente une trop grande proportion de sa surface qui est surexposée ; et, lorsqu'il est établi que tel est le cas,
vi) Créer une troisième image à partir de la deuxième image en supprimant de celle-ci au moins un pixel négligeable présentant un albédo supérieur à une valeur limite ;
vii) Créer une quatrième image à partir de la troisième image au moyen d'un module d'apprentissage profond qui est en mesure de remplacer le pixel négligeable par un pixel qui correspond à des surfaces que l'on trouve habituellement derrière un véhicule automobile;
viii) déterminer si la quatrième image présente une trop grande proportion de sa surface qui est surexposée ; et, lorsqu'il est établi que tel est le cas,
ix) provoquer la fourniture par l'interface homme-machine d'une invitation à changer la position du véhicule, ladite invitation étant fournie sous forme sonore et/ou visuelle.

Selon une variante, l'étape ii) peut comprendre les étapes de :
- déterminer, à partir de la première image, une première carte d'albédo en appliquant le modèle Lambertien de réflectance ;
- réaliser une analyse de la première carte d'albédo, ladite analyse de la première carte d'albédo consistant à débuter à partir du pixel situé au centre de celle-ci et progresser de proche en proche, pixel par pixel, en déterminant pour chaque pixel s'il définit un albédo qui est supérieur à une valeur limite préétablie ; et
- établir que la première image présente une trop grande proportion de sa surface qui est surexposée dès lors qu'il est établi, au cours de ladite analyse de la première carte d'albédo, que, dans la première carte d'albédo, la proportion de pixels qui définissent un albédo qui est supérieur à la valeur limite dépasse une valeur seuil préétablie.

Selon une autre variante, l'étape v) peut comprendre les étapes de :
- déterminer, à partir de la deuxième image, une deuxième carte d'albédo en appliquant le modèle Lambertien de réflectance ;
- réaliser une analyse de la deuxième carte d'albédo, ladite analyse de la deuxième carte d'albédo consistant à débuter à partir du pixel situé au centre de celle-ci et progresser de proche en proche, pixel par pixel, en déterminant pour chaque pixel s'il définit un albédo qui est supérieur à la valeur limite ; et
- établir que la deuxième image présente une trop grande proportion de sa surface qui est surexposée dès lors qu'il est établi, au cours de ladite analyse de la deuxième carte d'albédo, que, dans la deuxième carte d'albédo, la proportion de pixels qui définissent un albédo qui est supérieur à la valeur limite dépasse la valeur seuil.

Selon une autre variante, l'étape viii) peut comprendre les étapes de :
- déterminer, à partir de la quatrième image, une troisième carte d'albédo en appliquant le modèle Lambertien de réflectance ;
- réaliser une analyse de la troisième carte d'albédo, ladite analyse de la troisième carte d'albédo consistant à débuter à partir du pixel situé au centre de celle-ci et à progresser de proche en proche, pixel par pixel, en déterminant pour chaque pixel s'il définit un albédo qui est supérieur à la valeur limite ; et
- établir que la quatrième image présente une trop grande proportion de sa surface qui est surexposée dès lors qu'il est établi, au cours de ladite analyse de la troisième carte d'albédo, que, dans la troisième carte d'albédo, la proportion de pixels qui définissent un albédo qui est supérieur à la valeur limite dépasse la valeur seuil.

Selon une autre variante, l'étape vi) peut comprendre les étapes de :
- sélectionner un pixel particulier de la deuxième carte d'albédo qui définit un albédo supérieur à la valeur limite ;
- établir que ledit pixel négligeable est celui qui, dans la deuxième image, correspond audit pixel particulier de la deuxième carte d'albédo.

Selon une autre variante, l'étape ix) peut comprendre une étape consistant à provoquer une transmission de la deuxième image à destination d'un serveur distant.

En outre, l'invention a également pour objet un système pour gérer le fonctionnement d'une caméra de recul agencée à bord d'un véhicule automobile pour réaliser des prises de vues des environs du véhicule et d'une interface homme-machine du véhicule, le système comprenant au moins une unité de traitement d'informations, comprenant au moins un processeur, et un support de stockage de données configurés pour mettre en œuvre un procédé tel que décrit ci-dessus.

De plus, l'invention a aussi pour objet un programme comprenant des instructions de code de programme pour l'exécution des étapes d'un procédé tel que décrit ci-dessus lorsque ledit programme est exécuté sur un ordinateur et/ou un processeur.

Par ailleurs, l'invention a aussi pour objet un support utilisable dans un ordinateur, sur lequel un programme tel que décrit ci-dessus est enregistré.

Enfin, l'invention a aussi pour objet un véhicule automobile comprenant un système tel que décrit ci-dessus.

### Brève description des figures

D'autres caractéristiques et avantages de l'invention apparaîtront à l'examen de la description détaillée ci-après, et des dessins annexés, sur lesquels :
[Fig. 1] est un diagramme fonctionnel d'un système selon l'invention ; et
[Fig. 2] est un organigramme illustrant les étapes d'un procédé selon l'invention.

### Description détaillée de l'invention

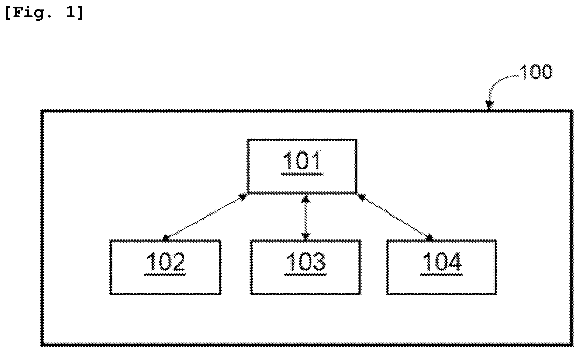

Selon l'invention, un système 100 pour gérer le fonctionnement d'une caméra d'un véhicule automobile agencée à bord du véhicule pour réaliser des prises de vues des environs du véhicule et d'une interface homme-machine du véhicule est un système informatique, représenté schématiquement à la figure 1, qui comprend une unité de traitement d'informations 101, comprenant un ou plusieurs processeurs, un support de stockage de données 102, au moins une interface d'entrée et sortie 103, permettant la réception de données et l'émission de données, et un module d'apprentissage profond 104, qui, préférentiellement, comprend un réseau de neurones artificiels, par exemple un réseau de neurones convolutifs.

Selon certains modes de réalisation, le système 100 selon l'invention est embarqué dans un véhicule automobile (e.g. voiture, autobus, poids lourd, etc.) et il est hébergé sur un ou plusieurs des calculateurs, unités de commande électroniques ou autres boitiers télématiques du véhicule. Selon d'autres modes de réalisation, le système 100 selon l'invention est hébergé sur un calculateur d'un véhicule automobile et il interagit par le biais de son interface d'entrée et sortie 103 avec un calculateur d'un appareillage d'aide à la conduite d'un véhicule automobile. Selon le mode de réalisation préféré, le système 100 selon l'invention fait partie intégrante d'un calculateur d'un appareillage d'aide à la conduite d'un véhicule automobile.

Par conséquent, quel que soit le mode de réalisation de l'invention, le système 100 selon l'invention est toujours en mesure d'interagir, par le biais de son interface d'entrée et sortie 103, non seulement avec un appareillage d'aide à la conduite d'un véhicule automobile, mais également, via un tel appareillage d'aide à la conduite, avec tout autre appareillage qui, de manière conventionnelle, équipe et/ou interagit avec un appareillage d'aide à la conduite d'un véhicule automobile. Or, selon l'invention, un appareillage d'aide à la conduite d'un véhicule automobile comprend au moins une caméra, préférentiellement une caméra agencée à l'arrière du véhicule, i.e. une caméra de recul. Ainsi, en interagissant avec ou en faisant partie intégrante d'un tel appareillage d'aide à la conduite d'un véhicule automobile, le système 100 selon l'invention est notamment en mesure d'acquérir une image générée au moyen d'une caméra agencée à bord du véhicule pour réaliser des prises de vues des environs du véhicule.

De plus, pour mettre en œuvre au moins l'une des étapes du procédé selon l'invention décrit ci-dessous, le système 100 selon l'invention comprend des moyens matériels et logiciels pour interagir avec une interface homme-machine d'un véhicule automobile, qui comprend au moins un écran agencé à proximité du poste de conduite du véhicule et un haut-parleur. Ainsi, grâce à ces moyens, le système 100 selon l'invention est notamment en mesure de provoquer la fourniture par l'interface homme-machine d'un véhicule automobile d'une invitation, ladite invitation étant fournie sous forme sonore et/ou visuelle.

En outre, pour mettre en œuvre au moins une étape du procédé selon l'invention décrit ci-dessous, le dispositif 100 selon l'invention comprend également des moyens matériels et logiciels pour interagir avec un appareillage de communication par signaux radiofréquences 105 d'un véhicule automobile, qui, de manière conventionnelle, comprend des moyens pour communiquer avec un réseau de communication public, par exemple le réseau Internet, et, ainsi, pour pouvoir échanger des données (i.e. transmettre et recevoir) avec au moins un serveur distant du véhicule. Ainsi, par ces moyens, le dispositif 100 selon l'invention est notamment en mesure de provoquer une transmission de données à destination d'un serveur distant.

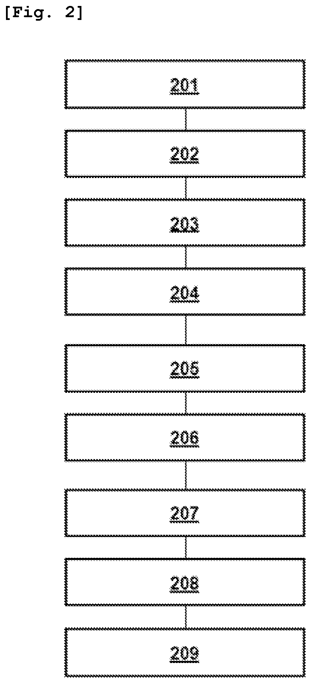

Selon l'invention, tous les éléments décrits ci-dessus contribuent donc pour permettre au système 100 selon l'invention de mettre en œuvre, à bord d'un véhicule automobile, un procédé de gestion du fonctionnement d'une caméra agencée à bord du véhicule pour réaliser des prises de vues des environs du véhicule et d'une interface homme-machine du véhicule, tel que décrit ci-dessous en lien avec la figure 2.

Selon une première étape 201 du procédé selon l'invention, le système 100 selon l'invention acquiert une première image générée au moyen de la caméra de la caméra du véhicule. Pour ce faire, le système 100 selon l'invention interagit directement avec la caméra ou avec l'appareillage d'aide à la conduite du véhicule dans le cas où il ne fait pas partie intégrante de celui-ci.

Ensuite, selon une deuxième étape 202 du procédé selon l'invention, le système 100 selon l'invention détermine si la première image présente une trop grande proportion de sa surface qui est surexposée. Pour ce faire, le système 100 selon l'invention procède tout d'abord en déterminant, à partir de la première image, une première carte d'albédo, i.e. une image dans laquelle chaque pixel prend une teinte plus ou moins foncée, ou plus ou moins colorée, en fonction de l'albédo, autrement dit le coefficient de réflexion, du pixel auquel il correspond dans la première image (nb : la première carte d'albédo a exactement les mêmes dimensions que la première image, si bien qu'il existe un lien direct entre chaque pixel de la carte d'albédo et chaque pixel de la première image). Et pour déterminer la première carte d'albédo, le système 100 selon l'invention applique avantageusement le modèle Lambertien de réflectance. L'avantage d'utiliser le modèle Lambertien de réflectance est de minimiser le temps de calcul qui est nécessaire pour déterminer la première carte d'albédo. En effet, comme on le sait, le modèle Lambertien de réflectance fait partie des modèles les plus simples pour simuler la réflexion de la lumière sur des surfaces diffuses, c'est-à-dire le type de surface qui, dans la réalité, sont celles que l'on trouve généralement derrière un véhicule automobile (e.g. goudron, pré en herbe, piste caillouteuse, etc.). Ainsi, grâce à ce choix du modèle Lambertien, le système 100 selon l'invention contribue avantageusement à minimiser le temps qui lui est nécessaire pour déterminer la première carte d'albédo à partir de la première image. Ensuite, le système 100 procède en réalisant une analyse de la première carte d'albédo, analyse qui débute avantageusement à partir du pixel situé au centre de la première carte d'albédo et qui progresse ensuite de proche en proche, pixel par pixel, en déterminant pour chaque pixel s'il définit un albédo qui est supérieur à une valeur limite préétablie, par exemple 0.4. Enfin, le système 100 selon l'invention établit que la première image présente une trop grande proportion de sa surface qui est surexposée dès lors qu'il établit, au cours de ladite analyse de la première carte d'albédo, que, dans la première carte d'albédo, la proportion de pixels qui définissent un albédo qui est supérieur à la valeur limite dépasse une valeur seuil préétablie, par exemple 10%. Ainsi, par le fait que l'analyse de la première carte d'albédo débute par le pixel situé en son centre, c'est-à-dire à partir de l'endroit qui est finalement le plus parlant du point de vue de la conduite, car, dans une image d'une caméra de recul, c'est en effet surtout la portion la plus au centre de l'image qui a un intérêt, puis que l'analyse progresse de proche en proche et s'arrête dès lors qu'il est établi qu'une proportion de pixels qui définissent des valeurs d'albédo élevées est dépassée, le système 100 selon l'invention minimise là encore le temps de calcul qui lui est nécessaire pour, au final, pouvoir déterminer si la première image présente ou non une trop grande proportion de sa surface qui est surexposée, i.e. trop claire, et donc inutilisable du point de vue de la conduite.

Ensuite, lorsque le système 100 selon l'invention a déterminé que la première image présente une trop grande proportion de sa surface qui est surexposée, il procède en réalisant les étapes suivantes du procédé décrites ci-dessous.

Selon une troisième étape 203 du procédé selon l'invention, le système 100 selon l'invention provoque une modification d'au moins un réglage de la caméra. Pour ce faire, le système 100 selon l'invention interagit une fois encore directement avec la caméra avec l'appareillage d'aide à la conduite du véhicule dans le cas où il ne fait pas partie intégrante de celui-ci pour provoquer à ce stade une modification d'un réglage qui influe sur la focale, la mise au point et/ou l'ouverture du diaphragme de la caméra.

Ensuite, selon une quatrième étape 204 du procédé selon l'invention, le système 100 selon l'invention acquiert une deuxième image générée au moyen de la caméra, et, selon une cinquième étape 205 du procédé selon l'invention, il détermine si la deuxième image présente une trop grande proportion de sa surface qui est surexposée, en procédant pour ce faire exactement de la même manière que lors de la deuxième étape 202 du procédé. En d'autres termes, le système 100 selon l'invention procède tout d'abord en déterminant, à partir de la deuxième image, une deuxième carte d'albédo en appliquant le modèle Lambertien de réflectance. Ensuite, le système 100 réalise une analyse de la deuxième carte d'albédo, analyse qui débute aussi à partir du pixel situé au centre de la deuxième carte d'albédo et qui progresse ensuite de proche en proche, pixel par pixel, en déterminant pour chaque pixel s'il définit un albédo qui est supérieur à la valeur limite, et il établit enfin que la deuxième image présente une trop grande proportion de sa surface qui est surexposée dès lors qu'il établit, au cours de l'analyse de la deuxième carte d'albédo, que, dans la deuxième carte d'albédo, la proportion de pixels qui définissent un albédo qui est supérieur à la valeur limite dépasse la valeur seuil.

Ensuite, lorsque le système 100 selon l'invention a déterminé que la deuxième image présente une trop grande proportion de sa surface qui est surexposée, il procède en réalisant les étapes suivantes du procédé décrites ci-dessous.

Selon une sixième étape 206 du procédé selon l'invention, le système 100 selon l'invention traite la deuxième image en supprimant de celle-ci au moins un pixel négligeable de sorte à créer une troisième image. Et pour déterminer quel est ce pixel négligeable qui doit être supprimé, le système selon l'invention sélectionne un pixel particulier de la deuxième carte d'albédo qui définit un albédo supérieur à la valeur limite et il établit que le pixel négligeable qui doit être supprimé est celui qui, dans la deuxième image, correspond au pixel particulier de la deuxième carte d'albédo, celui qui a été sélectionné et qui définit un albédo supérieur à la valeur limite.

Ensuite, selon une septième étape 207 du procédé selon l'invention, le système 100 selon l'invention traite la troisième image, celle qui a été créée au cours de l'étape précédente 206 du procédé, au moyen du module d'apprentissage profond 104 pour créer une quatrième image. De manière avantageuse, le module d'apprentissage profond a justement été préalablement entraîné en utilisant une banque d'images surexposées et tronquées, images qui sont donc de nature similaire à celle de la troisième image, et il est en donc mesure, sur la base d'une telle image surexposée et tronquée, de créer une image dans laquelle des pixels manquants sont remplacés par des pixels qui correspondent à des surfaces que l'on trouve habituellement derrière un véhicule automobile.

Ensuite, selon une huitième étape 208 du procédé selon l'invention, le système 100 selon l'invention détermine si la quatrième image présente une trop grande proportion de sa surface qui est surexposée, en procédant pour ce faire exactement de la même manière que lors de la deuxième 202 et de la cinquièmes étape 205 du procédé. En d'autres termes, le système 100 selon l'invention procède tout d'abord en déterminant, à partir de la quatrième image, une troisième carte d'albédo en appliquant le modèle Lambertien de réflectance. Ensuite, le système 100 réalise une analyse de la troisième carte d'albédo, analyse qui débute encore à partir du pixel situé au centre de la troisième carte d'albédo et qui progresse ensuite de proche en proche, pixel par pixel, en déterminant pour chaque pixel s'il définit un albédo qui est supérieur à la valeur limite. Enfin, le système 100 établit que la quatrième image présente une trop grande proportion de sa surface qui est surexposée dès lors qu'il établit, au cours de l'analyse de la troisième carte d'albédo, que, dans la troisième carte d'albédo, la proportion de pixels qui définissent un albédo qui est supérieur à la valeur limite dépasse la valeur seuil.

Ensuite, lorsque le système 100 selon l'invention a déterminé que la quatrième image présente une trop grande proportion de sa surface qui est surexposée, il procède en réalisant une neuvième étape 209 du procédé selon l'invention, étape au cours de laquelle le système 100 provoque, en interagissant pour cela avec l'interface homme-machine du véhicule, la fourniture par l'interface homme-machine d'une invitation à changer la position du véhicule, invitation qui est fournie sous forme sonore et/ou visuelle au moyen d'un haut-parleur et/ou d'un écran de l'interface homme-machine. Ainsi, au terme de cette neuvième étape, le conducteur du véhicule est invité à modifier la position du véhicule car la position actuelle du véhicule est telle que la caméra n'est en mesure de fournir qu'une image surexposée qui est donc inutilisable pour permettre la réalisation de la manœuvre en marche arrière de manière sûre.

En outre, de manière subsidiaire, le système 100 selon l'invention peut également réaliser une ultime étape au cours de laquelle il provoque, en interagissant pour cela avec l'appareillage de communication par signaux radiofréquences du véhicule, une transmission de la deuxième image à destination d'un serveur distant, serveur distant qui va pouvoir avantageusement exploiter cette image pour affiner le fonctionnement du module d'apprentissage profond 104.

Ainsi, grâce au procédé et au système selon l'invention décrits ci-dessus, une solution existe pour permettre de minimiser le risque d'accident dans ces situations où une prise de vue réalisée au moyen d'une caméra de recul d'un véhicule automobile et diffusée sur un écran d'une interface homme-machine du véhicule présente une trop grande proportion de sa surface qui est surexposée. Par ce biais, l'invention améliore indéniablement la sécurité de la conduite lors la réalisation de manœuvres en marche arrière avec des véhicules qui sont équipés d'une caméra de recul.

## Revendications

1. Procédé de gestion, par un système informatique embarqué à bord d'un véhicule automobile, du fonctionnement d'une caméra de recul agencée à bord du véhicule pour réaliser des prises de vues des environs du véhicule et d'une interface homme-machine du véhicule, **caractérisé en ce que** le procédé comprend les étapes de :
i) acquérir une première image générée au moyen de la caméra ;
ii) déterminer si la première image présente une trop grande proportion de sa surface qui est surexposée ; et, lorsqu'il est établi que tel est le cas,
iii) provoquer une modification d'au moins un réglage de la caméra ;
iv) acquérir une deuxième image générée au moyen de la caméra ;
v) déterminer si la deuxième image présente une trop grande proportion de sa surface qui est surexposée ; et, lorsqu'il est établi que tel est le cas,
vi) Créer une troisième image à partir de la deuxième image en supprimant de celle-ci au moins un pixel négligeable présentant un albédo supérieur à une valeur limite ;
vii) Créer une quatrième image à partir de la troisième image au moyen d'un module d'apprentissage profond (104) qui est en mesure de remplacer le pixel négligeable par un pixel qui correspond à des surfaces que l'on trouve habituellement derrière un véhicule automobile ;
viii) déterminer si la quatrième image présente une trop grande proportion de sa surface qui est surexposée ; et, lorsqu'il est établi que tel est le cas,
ix) provoquer la fourniture par l'interface homme-machine d'une invitation à changer la position du véhicule, ladite invitation étant fournie sous forme sonore et/ou visuelle.

2. Procédé selon la revendication 1, **caractérisé en ce que** l'étape ii) comprend les étapes de :
• déterminer, à partir de la première image, une première carte d'albédo en appliquant le modèle Lambertien de réflectance ;
• réaliser une analyse de la première carte d'albédo, ladite analyse de la première carte d'albédo consistant à débuter à partir du pixel situé au centre de celle-ci et progresser de proche en proche, pixel par pixel, en déterminant pour chaque pixel s'il définit un albédo qui est supérieur à une valeur limite préétablie ; et
• établir que la première image présente une trop grande proportion de sa surface qui est surexposée dès lors qu'il est établi, au cours de ladite analyse de la première carte d'albédo, que, dans la première carte d'albédo, la proportion de pixels qui définissent un albédo qui est supérieur à la valeur limite dépasse une valeur seuil préétablie.

3. Procédé selon la revendication 2, **caractérisé en ce que** l'étape v) comprend les étapes de :
• déterminer, à partir de la deuxième image, une deuxième carte d'albédo en appliquant le modèle Lambertien de réflectance ;
• réaliser une analyse de la deuxième carte d'albédo, ladite analyse de la deuxième carte d'albédo consistant à débuter à partir du pixel situé au centre de celle-ci et progresser de proche en proche, pixel par pixel, en déterminant pour chaque pixel s'il définit un albédo qui est supérieur à la valeur limite ; et
• établir que la deuxième image présente une trop grande proportion de sa surface qui est surexposée dès lors qu'il est établi, au cours de ladite analyse de la deuxième carte d'albédo, que, dans la deuxième carte d'albédo, la proportion de pixels qui définissent un albédo qui est supérieur à la valeur limite dépasse la valeur seuil.

4. Procédé selon l'une des revendications 2-3, **caractérisé en ce que** l'étape viii) comprend les étapes de :
• déterminer, à partir de la quatrième image, une troisième carte d'albédo en appliquant le modèle Lambertien de réflectance ;
• réaliser une analyse de la troisième carte d'albédo, ladite analyse de la troisième carte d'albédo consistant à débuter à partir du pixel situé au centre de celle-ci et à progresser de proche en proche, pixel par pixel, en déterminant pour chaque pixel s'il définit un albédo qui est supérieur à la valeur limite ; et
• établir que la quatrième image présente une trop grande proportion de sa surface qui est surexposée dès lors qu'il est établi, au cours de ladite analyse de la troisième carte d'albédo, que, dans la troisième carte d'albédo, la proportion de pixels qui définissent un albédo qui est supérieur à la valeur limite dépasse la valeur seuil.

5. Procédé selon la revendication 3, **caractérisé en ce que** l'étape vi) comprend les étapes de :
• sélectionner un pixel particulier de la deuxième carte d'albédo qui définit un albédo supérieur à la valeur limite ;
• établir que ledit pixel négligeable est celui qui, dans la deuxième image, correspond audit pixel particulier de la deuxième carte d'albédo.

6. Procédé selon l'une des revendications précédentes, **caractérisé en ce que** l'étape ix) comprend une étape consistant à provoquer une transmission de la deuxième image à destination d'un serveur distant.

7. Système (100) pour gérer le fonctionnement d'une caméra de recul d'un véhicule automobile agencée à bord du véhicule pour réaliser des prises de vues des environs du véhicule et d'une interface homme-machine du véhicule, **caractérisé en ce que** le système comprend au moins une unité de traitement d'informations (101), comprenant au moins un processeur, et un support de stockage de données (102) configurés pour mettre en œuvre un procédé selon l'une quelconque des revendications précédentes.

8. Programme d'ordinateur comprenant des instructions de code de programme pour l'exécution des étapes d'un procédé selon l'une quelconque des revendications 1 à 6 lorsque ledit programme est exécuté sur un ordinateur inclus dans un système selon la revendication 7.

9. Support utilisable dans un ordinateur, **caractérisé en ce qu'**un programme selon la revendication 8 y est enregistré.

10. Véhicule automobile, **caractérisé en ce qu'**il comprend un système selon la revendication 7.

## Patentansprüche

1. Verfahren zum Verwalten des Betriebs einer an Bord des Fahrzeugs angeordneten Rückfahrkamera zum Aufnehmen von Bildern der Umgebung des Fahrzeugs und einer Mensch-Maschine-Schnittstelle des Fahrzeugs durch ein Computersystem an Bord des Kraftfahrzeugs, **dadurch gekennzeichnet, dass** das Verfahren die folgenden Schritte umfasst:
i) Aufnahme eines ersten mittels der Kamera erzeugten Bildes;
ii) festzustellen, ob das erste Bild einen zu großen Anteil seiner Oberfläche hat, der überbelichtet ist, und, wenn dies festgestellt wird,
iii) mindestens eine Kameraeinstellung ändern;
iv) ein zweites von der Kamera erzeugtes Bild zu erfassen;
v) festzustellen, ob die Oberfläche des zweiten Bildes zu stark überbelichtet ist, und, wenn dies nachweislich der Fall ist,
vi) Erzeugung eines dritten Bildes aus dem zweiten Bild durch Entfernen mindestens eines vernachlässigbaren Pixels mit einer Albedo größer als ein Grenzwert;
vii) Erstellung eines vierten Bildes aus dem dritten Bild mittels eines Deep-Learning-Moduls (104), das in der Lage ist, das vernachlässigbare Pixel durch ein Pixel zu ersetzen, das Oberflächen entspricht, die normalerweise hinter einem Kraftfahrzeug zu finden sind;
viii) festzustellen, ob die Oberfläche des vierten Bildes zu stark überbelichtet ist, und, wenn dies nachweislich der Fall ist,
ix) Veranlassung der Mensch-Maschine-Schnittstelle, eine Einladung zur Positionsänderung des Fahrzeugs in akustischer und/oder visueller Form zu geben.

2. Verfahren nach Anspruch 1, **wobei** Schritt ii) die folgenden Schritte umfasst:
• die Bestimmung einer ersten Albedokarte anhand des ersten Bildes durch Anwendung des Lambertschen Reflexionsmodells;
• durchführen einer Analyse der ersten Albedo-Karte, wobei die Analyse der ersten Albedo-Karte darin besteht, von dem Pixel, das sich an der Verbindung davon befindet, auszugehen und Schritt für Schritt, Pixel für Pixel, fortzuschreiten, indem für jedes Pixel bestimmt wird, ob es eine Albedo definiert, die größer als ein voreingestellter Grenzwert ist; und
• feststellen, dass das erste Bild einen zu großen Anteil seiner Oberfläche aufweist, der überbelichtet ist, wenn bei der Analyse der ersten Albedo-Karte festgestellt wird, dass in der ersten Albedo-Karte der Anteil von Pixeln, die eine Albedo definieren, die größer als der Grenzwert ist, einen vorgegebenen Schwellenwert überschreitet.

3. Verfahren nach Anspruch 2, **wobei** Schritt v) die folgenden Schritte umfasst:
• anhand des zweiten Bildes eine zweite Albedo-Karte durch Anwendung des Lambertschen Reflexionsmodells bestimmt wird;
• durchführen einer Analyse der zweiten Albedo-Karte, wobei die Analyse der zweiten Albedo-Karte darin besteht, von dem Pixel, das sich an der Verbindung davon befindet, auszugehen und Schritt für Schritt, Pixel für Pixel, fortzuschreiten, indem für jedes Pixel bestimmt wird, ob es eine Albedo definiert, die größer als der Grenzwert ist; und
• feststellen, dass das zweite Bild einen zu großen Anteil seiner Oberfläche aufweist, der überbelichtet ist, wenn bei der Analyse der zweiten Albedo-Karte festgestellt wird, dass in der zweiten AlbedoKarte der Anteil der Pixel, die eine Albedo definieren, die größer als der Grenzwert ist, den Schwellenwert überschreitet.

4. Verfahren nach einem der Ansprüche 2 bis 3, **dadurch gekennzeichnet, dass** Schritt viii) die Schritte umfasst:
• anhand des vierten Bildes eine dritte Albedokarte durch Anwendung des Lambertschen Reflexionsmodells bestimmt wird;
• Durchführung einer Analyse der dritten Albedo-Karte, wobei die Analyse der dritten Albedo-Karte darin besteht, von dem Pixel, das sich an der Verbindung der letzteren befindet, auszugehen und Schritt für Schritt Pixel für Pixel fortzuschreiten, indem für jedes Pixel bestimmt wird, ob es eine Albedo definiert, die größer als der Grenzwert ist, und
• Feststellen, dass das vierte Bild einen zu großen Anteil seiner Oberfläche aufweist, der überbelichtet ist, wenn bei der Analyse der dritten Albedo-Karte festgestellt wird, dass in der dritten AlbedoKarte der Anteil der Pixel, die eine Albedo definieren, die größer als der Grenzwert ist, den Schwellenwert überschreitet.

5. Verfahren nach Anspruch 3, **wobei** Schritt vi) die folgenden Schritte umfasst:
• Wählen Sie ein bestimmtes Pixel der zweiten Albedozuordnung aus, das eine Albedo definiert, die größer als der Begrenzungswert ist.
• Feststellen, dass das vernachlässigbare Pixel dasjenige ist, das im zweiten Bild dem jeweiligen Pixel der zweiten Albedo-Karte entspricht.

6. Verfahren nach Anspruch 1, **wobei** Schritt ix) einen Schritt umfasst, der darin besteht, eine Übertragung des zweiten Bildes zu einem entfernten Server zu bewirken.

7. System (100) zum Verwalten des Betriebs einer Rückfahrkamera eines Kraftfahrzeugs, die an Bord des Fahrzeugs angeordnet ist, um Bilder der Umgebung des Fahrzeugs und einer Mensch-Maschine-Schnittstelle des Fahrzeugs aufzunehmen, **wobei** das System mindestens eine Informationsverarbeitungseinheit (101) umfasst, die mindestens einen Prozessor umfasst, und ein Datenspeichermedium (102), das konfiguriert ist, um ein Verfahren nach einem der vorhergehenden Ansprüche zu implementieren.

8. Computerplan, der Plancodeanweisungen zum Ausführen der Schritte eines Verfahrens nach einem der Ansprüche 1 bis 6 umfasst, wenn der Plan auf einem Computer ausgeführt wird, der in einem System nach Anspruch 7 enthalten ist.

9. Medium, das in einem Computer verwendbar ist, wobei ein Plan nach Anspruch 8 darin aufgezeichnet ist.

10. Kraftfahrzeug, **dadurch gekennzeichnet, dass** es ein System nach Anspruch 7 umfasst.

## Claims

1. Method for managing, by a computer system on board a motor vehicle, the operation of a reversing camera arranged on board the vehicle to take pictures of the surroundings of the vehicle and of a man-machine interface of the vehicle, **characterised in that** the method comprises the steps of:
i) acquiring a first image generated by means of the camera;
ii) determining whether the first image has too large a proportion of its surface that is overexposed; and, when it is established that this is the case,
iii) cause at least one setup of the camera to change;
iv) acquire a second image generated by the camera;
v) determine whether the second image has too much of its surface that is overexposed; and, where it is established that this is the case,
vi) create a third image from the second image by removing therefrom at least one negligible pixel having an albedo greater than a limit value;
vii) create a fourth image from the third image by means of a deep learning module (104) that is capable of replacing the negligible pixel with a pixel that corresponds to surfaces usually found behind a motor vehicle;
viii) determine whether the fourth image has too much of its surface that is overexposed; and, where it is established that this is the case,
ix) cause the human-machine interface to provide an invitation to change the position of the vehicle, said invitation being provided in audible and/or visual format.

2. Method according to claim 1, **wherein** step ii) comprises the steps of:
• determining, from the first image, a first albedo map by applying the Lambertian reflectance model;
• performing an analysis of the first albedo map, said analysis of the first albedo map consisting in starting from the pixel located at the compound thereof and progressing step by step, pixel by pixel, by determining for each pixel whether it defines an albedo that is greater than a preset boundary value; and
• establishing that the first image has too large a proportion of its surface which is overexposed when it is established, during said analysis of the first albedo map, that, in the first albedo map, the proportion of pixels which define an albedo which is greater than the boundary value exceeds a pre-established threshold value.

3. Method according to claim 2, **wherein** step v) comprises the steps of:
* determining, from the second image, a second albedo map by applying the Lambertian reflectance model;
• performing an analysis of the second albedo map, said analysis of the second albedo map consisting in starting from the pixel located at the compound thereof and progressing step by step, pixel by pixel, by determining for each pixel whether it defines an albedo which is greater than the boundary value; and
• establishing that the second image has too large a proportion of its surface which is overexposed when it is established, during said analysis of the second albedo map, that, in the second albedo map, the proportion of pixels which define an albedo which is greater than the boundary value exceeds the threshold value.

4. Process according to one of claims 2-3, **characterised in that** step viii) comprises the steps of:
• determining, from the fourth image, a third albedo map by applying the Lambertian reflectance model;
• performing an analysis of the third albedo map, said analysis of the third albedo map consisting in starting from the pixel located at the compound of the latter and progressing step by step, pixel by pixel, by determining for each pixel whether it defines an albedo which is greater than the boundary value; and
• establishing that the fourth image has too large a proportion of its surface which is overexposed when it is established, during said analysis of the third albedo map, that, in the third albedo map, the proportion of pixels which define an albedo which is greater than the boundary value exceeds the threshold value.

5. Method according to claim 3, **wherein** step vi) comprises the steps of:
* select a particular pixel of the second albedo map that defines an albedo greater than the boundary value;
• establishing that said negligible pixel is the one which, in the second image, corresponds to said particular pixel of the second albedo map.

6. Method according to claim 1, **wherein** step ix) comprises a step consisting in causing a transmission of the second image to a remote server.

7. System (100) for managing the operation of a rear view camera of a motor vehicle arranged on board the vehicle to take pictures of the surroundings of the vehicle and of a man-machine interface of the vehicle, **wherein** the system comprises at least one information processing unit (101), comprising at least one processor, and a data storage medium (102) configured to implement a method according to any one of the previous claims.

8. Computer plan comprising plan code instructions for executing the steps of a method according to any one of claims 1 to 6 when said plan is executed on a computer included in a system according to claim 7.

9. Medium usable in a computer, **wherein** a plan according to claim 8 is recorded therein.

10. Motor vehicle, **characterised in that** it comprises a system according to claim 7.
